# EUROPEAN PATENT SPECIFICATION

(11) **EP 4 383 478 B1**
(45) Date of publication and mention of the grant of the patent: **18.11.2026**
(21) Application number: 22852222.3
(22) Date of filing: 03.08.2022
(51) Int. Cl.: H01R 13/73, H01R 13/40, H01R 13/502, H01R 13/627, B60L 53/10, H01R 13/639, H01R 13/66, H01R 13/514

(54) **CHARGING BASE AND VEHICLE**
LADEBASIS UND FAHRZEUG
BASE DE CHARGE ET VÉHICULE

(30) Priority: 03.08.2021 CN 202121795341 U
(43) Date of publication of application: 12.06.2024
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Boult Wade Tennant LLP
(86) International application number: PCT/CN2022/109898
(87) International publication number: WO 2023/011510

(56) References cited:
- WO-A1-2015/044452
- WO-A1-2015/044452
- CN-A- 113 488 818
- CN-U- 208 401 134
- CN-U- 212 587 749
- CN-U- 212 587 749
- CN-U- 215 299 720
- JP-A- 2013 175 408
- LU-B1- 93 308
- US-A1- 2014 315 426
- US-A1- 2015 004 827

## Description

### RELATED APPLICATION

The present disclosure claims priority to Chinese Patent No. 202121795341.4, entitled "Charging socket and Vehicle" as filed on August 3, 2021.

### TECHNICAL FIELD

The present disclosure relates to the connection field of electrical connection elements, in particular to a charging socket and a vehicle.

### BACKGROUND

In new energy vehicles, new energy batteries need to use a charging system to replenish energy. A charging socket in the charging system includes: a device fixable to a vehicle body, a cable and an electrical connection device. The device fixable to the vehicle body has a rear cover, and the device fixable to the vehicle body is mounted on a vehicle, the electrical connection device is connected to the cable, a fixing clip fixes the electrical connection device to the device fixable to the vehicle body, the rear cover is fixed on the device fixable to the vehicle body, and the cable passes through the rear cover.

A DC connector and an AC connector are important components in the charging socket. At present, the DC connector and the AC connector are usually fixed by multi-point fastening and not be removed or mounted quickly, which creates a high degree of difficulty in the entire vehicle assembly process and after-sales maintenance. Conventional charging sockets are known from the prior art, for example from WO2015044452A1, CN212587749U, and CN208401134U.

### SUMMARY

An objective of the present disclosure is to provide a charging socket and a vehicle, in order to alleviate the technical problem of inconvenient disassembly and assembly of the DC connector and the AC connector in the charging socket. The present invention is set out in the appended set of claims. Any references to inventions or embodiments not falling within the scope of the independent claims are to be interpreted as examples useful for understanding the invention.

The objective of the present disclosure may be achieved in the technical solutions as follows:

The present disclosure provides a charging socket including: a device fixable to a vehicle body, a current connector and a detachable mechanism. The current connector is configured to be connected to an electrical connection device and a cable. The current connector is detachably fixed by the detachable mechanism to the device fixable to the vehicle body.

The present disclosure provides a vehicle, including the charging socket mentioned above.

The present disclosure has features and advantages as follows:
(1) a split structure is adopted between the current connector and the device fixable to the vehicle body for the purposes of quick disassembly and assembly and quick maintenance;
(2) the current connectors can be manufactured separately, in a case where one of a plurality of current connectors is damaged, the current connector can be replaced separately without replacing the entire charging socket; and
(3) the assembly process between the current connector and the device fixable to the vehicle body is simple, so that automatic production and mass production are readily realized.

### BRIEF DESCRIPTION OF THE DRAWINGS

The drawings below are only intended to schematically illustrate and demonstrate the present disclosure, and do not limit the scope of the present disclosure.
FIG. 1 is a schematic diagram illustrating a charging socket provided by the present disclosure.
FIG. 2 is an exploded view illustrating the charging socket illustrated in FIG. 1.
FIGS. 3-4 are schematic diagrams illustrating the AC connector in the charging socket provided by the present disclosure.
FIGS. 5-7 are schematic diagrams illustrating the device fixable to the vehicle body in the charging socket provided by the present disclosure.
FIG. 8 is a schematic diagram illustrating another embodiment of the charging socket provided by the present disclosure.

### DESCRIPTION OF EMBODIMENTS

In order to have a clearer understanding of the technical features, objective and effects of the present disclosure, embodiments of the present disclosure are currently described with reference to the drawings.

### Embodiment I

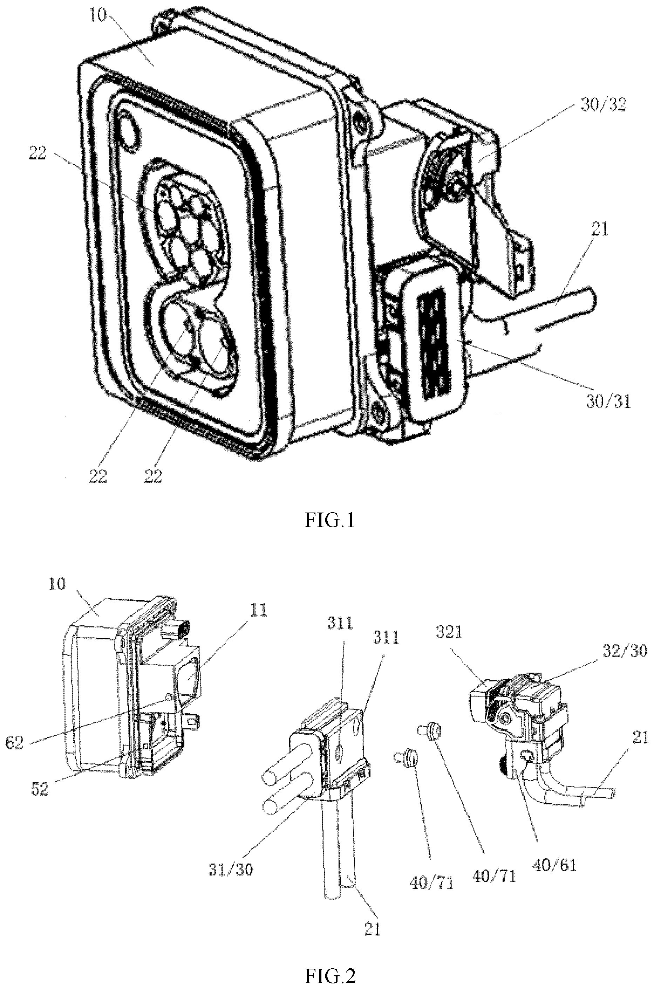

The present disclosure provides a charging socket, as illustrated in FIGS. 1-3, the charging socket includes: a device 10 fixable to a vehicle body, a current connector 30 and a detachable mechanism 40, in which the current connector 30 is configured to be connected to an electrical connection device 22 and a cable 21; the current connector 30 is detachably fixed by the detachable mechanism 40 to the device 10 fixable to the vehicle body.

The electrical connection device 22 is in a position where the device 22 is frequently plugged and unplugged from a charging device, and is also a main component that conducts a charging current. During prolonged, not only frequent plugging and unplugging operations result in deformation and coating damage of the electrical connection device 22, or even ignition and melting of the electrical connection device 22 as a result of an excessive current, thus the electrical connection device 22 cannot achieve functions thereof. In addition, the electrical connection device 22, when exposed to an external environment, may be corroded by water or salt in the environment, so that electrical properties of the electrical connection device 22 fail to meet the requirements. Therefore, in the entire charging socket, the electrical connection device 22 is the most vulnerable component, however, in most of the existing charging sockets, the electric connection device 22 is fixedly mounted on a charging socket body and is welded with the cable 21. In a case where the electrical connection device 22 is damaged, the electrical connection device 22, a fixing portion and the cable 21 need to be completely removed from the charging socket and replaced, even in severe cases, the entire charging socket needs to be replaced with cumbersome maintenance, long man-hours and high maintenance cost, which is one of the main issues currently restricting the development of rechargeable vehicle.

The charging socket proposed in this embodiment has advantages as follows: (1) a split structure is adopted between the current connector 30 and the device 10 fixable to the vehicle body for the purposes of quick disassembly and assembly and quick maintenance; (2) the current connectors 30 is capable of being manufactured separately, in a case where one of a plurality of current connectors 30 is damaged, the current connector 30 is capable of being replaced separately without replacing the entire charging socket; and (3) the assembly process between the current connectors 30 and the device 10 fixable to the vehicle body is simple, so that automatic production and mass production are readily realized.

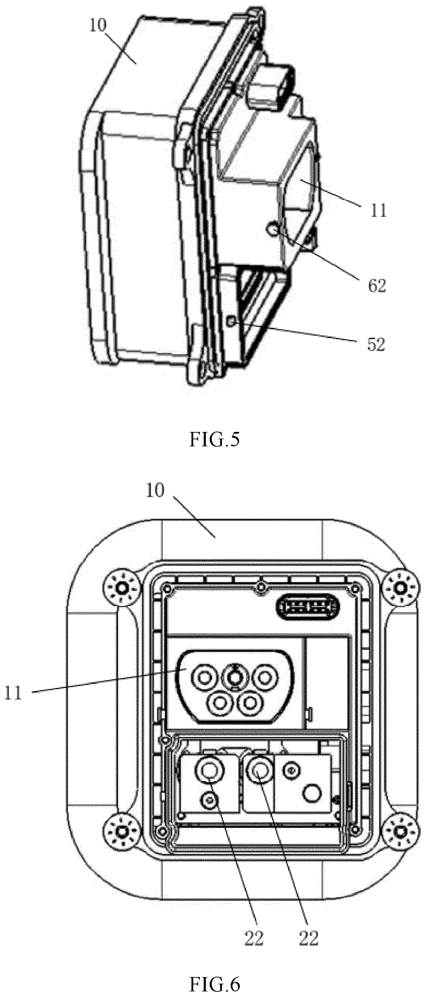

In one embodiment, the current connector 30 is provided with a mounting portion 321, and the device 10 fixable to the vehicle body is provided with a mounting hole 11. As illustrated in FIGS. 2-6, the mounting portion 321 is inserted into the mounting hole 11 and detachably connected, so as to realize pilot fit between the current connector 30 and the device 10 fixable to the vehicle body, in order to facilitate the disassembly and assembly thereof. When the current connector 30 is assembled with the device 10 fixable to the vehicle body, if no corresponding positioning mechanism exists, an assembly operator may take a long time to assemble the current connector 30 and the device 10 fixable to the vehicle body to a mounting position, and when the detachable mechanism 40 is used to fix the current connector 30 to the device 10 fixable to the vehicle body, a relative positional shift may occur and results in assembly failure.

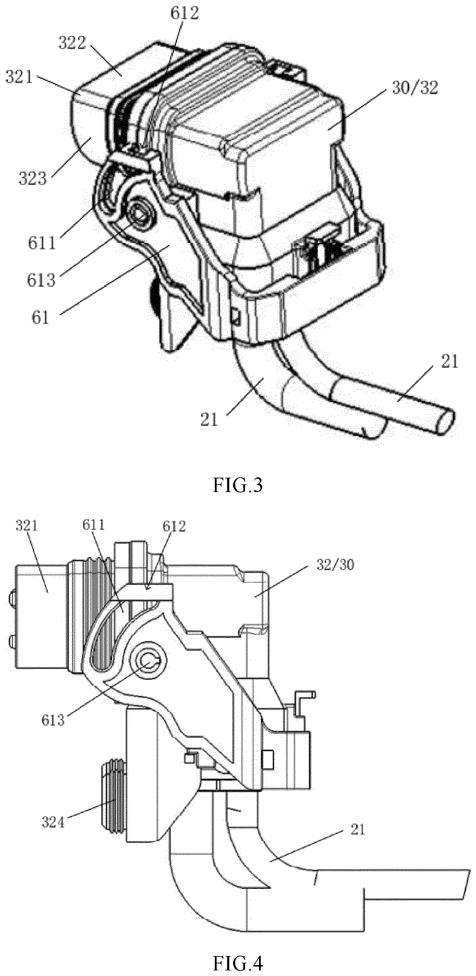

Further, as illustrated in FIG. 3, the mounting portion 321 includes: an arc-shaped wall 323 and a planar wall 322 adapted to an inner wall of the mounting hole 11, respectively, and the mounting portion 321 is inserted into the mounting hole 11 and fits with the mounting hole 11 through the planar wall 322 and the arc-shaped wall 323, which improves the fitting accuracy between the current connector 30 and the device 10 fixable to the vehicle body and helps to make the connection between the current connector 30 and the device 10 fixable to the vehicle body more stable. In addition, the arc-shaped wall 323 is also provided to distinguish a direction in which the mounting portion 321 is mounted as a mistake proofing device to prevent the mounting portion 321 from being reversely inserted into the mounting hole 11.

As illustrated in FIG. 1, the current connector 30 is disposed at a rear end of the device 10 fixable to the vehicle body, the electrical connection device 22 is disposed at a front end of the device 10 fixable to the vehicle body, and the electrical connection device 22 is configured to be connected to the current connector 30. The electrical connection device 22 may be a terminal The current connector 30 may be a DC connector 31 or an AC connector 32. The charging socket may include: a DC connector 31 and/or an AC connector 32.

In one embodiment, the detachable mechanism 40 includes a spring and a hook disposed on the device 10 fixable to the vehicle body, and a groove disposed on the current connector 30, and the current connector 30 is pressed so that the groove is engaged with the hook or disengaged from the hook, and the spring disengages the current connector 30 from the device 10 fixable to the vehicle body. With this structure, the current connector 30 and the device 10 fixable to the vehicle body can be assembled and disassembled without tools, so as to reduce steps during maintenance, save man-hours for disassembly and improve maintenance efficiency.

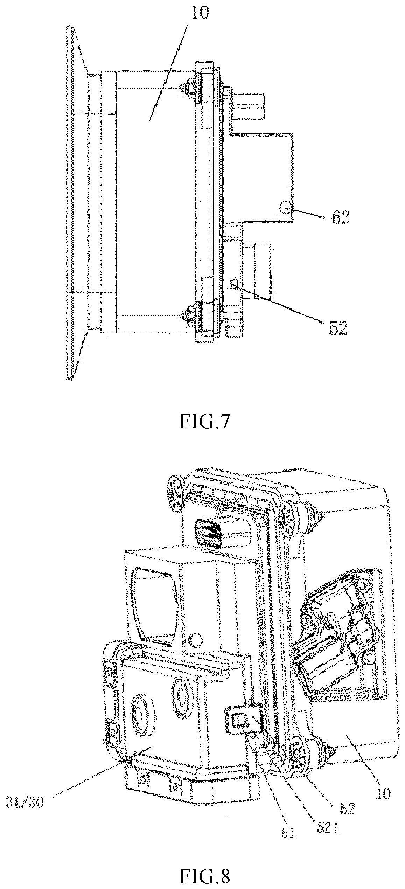

In one embodiment, as illustrated in FIGS. 7 and 8, the detachable mechanism 40 includes a card slot 52 disposed on the device 10 fixable to the vehicle body, and a snap-in tab 51 disposed on the current connector 30 and snapped into the card slot 52 to fix the current connector 30 to the device 10 fixable to the vehicle body, which is easy to operate, thus automatic production and batch production are readily achieved. The snap-in tab 51 and the card slot 52 can realize pre-fixation between the current connector 30 and the device 10 fixable to the vehicle body for subsequent fastening operations.

Further, a notch of the card slot 52 faces sideways, and the snap-in tab 51 moves along with the current connector 30 in a direction along a rear end pointing towards a front end until the snap-in tab 51 is snapped into the card slot 52. The snap-in tab 51 is engaged with the card slot 52 by pressing the current connector 30, while the current connector 30 is engaged with the device 10 fixable to the vehicle body, which is implemented in a convenient and efficient manner.

Further, the snap-in tab 51 is disposed on a side of the current connector 30, and the position of the card slot 52 corresponds to that of the snap-in tab 51, so that the snap-in tab 51 and the card slot 52 are readily matched.

In one embodiment, the detachable mechanism 40 includes a self-locking latch rod 61 disposed on the device 10 fixable to the vehicle body, and a locking shaft 62 disposed on the current connector 30, the self-locking latch rod 61 is hinged to the current connector 30 and is constructed to be flipped relative to the device 10 fixable to the vehicle body and snapped into the locking shaft 62 to fix the current connector 30 to the device 10 fixable to the vehicle body. As illustrated in FIGS. 3-4, the self-locking latch rod 61 is hinged to the current connector 30 through a pivot shaft 613, and the self-locking latch rod 61 is capable of rotating around the pivot shaft 613 relative to the current connector 30. In a case where the self-locking latch rod 61 is flipped and snapped into the locking shaft 62, the self-locking latch rod 61 stops rotating while locking the current connector 30 on the device 10 fixable to the vehicle body.

As illustrated in FIGS. 3 and 4, the self-locking latch rod 61 is provided with a locking groove 611, and after the locking shaft 62 is mated with the self-locking latch rod 61, the self-locking latch rod is capable of generating relative sliding within the locking groove 611 with respect to the self-locking latch rod 61. In a case where the self-locking latch rod 61 turns clockwise to a position illustrated in FIG. 4, the self-locking latch rod 61 forms a snap fit with the locking shaft 62 for interlocking. The locking shaft 62 is locked in the locking groove 611. As illustrated in FIG. 4, one end of the locking groove 611 is closed, and the other end of the locking groove 611 is provided with a groove opening 612, the locking shaft 62 is capable of entering the locking groove 611 through the groove opening 612, and the mounting portion 321 at an end of the current connector 30 is inserted into the mounting hole 11 and the self-locking latch rod 61 is rotated clockwise, so that the latch rod can smoothly enter the locking groove 611 through the groove opening 612.

Further, the locking groove 611 is curved. The locking shaft 62 generates relative sliding within the locking groove 611 during the rotation of the self-locking latch rod 61, after the locking shaft 62 enters the locking groove 611. In one embodiment, a distance between the locking groove 611 and the pivot shaft 613 gradually decreases from one end of the groove opening 612 to the other end, so that a side wall of the locking groove 611 gradually tightens the locking shaft 62 as the self-locking latch rod 61 rotates clockwise. Exemplarily, the locking groove 611 is in the shape of a circular curve set eccentrically positioned with respect to the pivot shaft 613; alternatively, the locking groove 611 is in the shape of a parabola.

Further, the device 10 fixable to the vehicle body is provided with a threaded hole, the current connector 30 is provided with a through hole, the detachable mechanism 40 includes a screw 71 threaded through the through hole and screwed into the threaded hole, so that the current connector 30 is fixed to the device 10 fixable to the vehicle body. The cable 21 and the current connector 30 can also be detachably connected by the screw 71. Further, the threaded hole is an embedded or pre-embedded internal threaded stud.

The internal threaded stud is exemplarily made of metal. The contact resistance between the cable 21 and the current connector 30 decreases gradually as a torque of the screw screwed into the threaded hole increases. Exemplarily, a torque of the screw 71 screwed into the threaded hole ranges from 0.1N·m to 30N·m.

In order to verify the torque range of the screw 71 screwed into the threaded hole and the impact on the connection between the device 10 fixable to the vehicle body and the current connector 30, the inventor selected the same device 10 fixable to the vehicle body, current connector 30 and screw 71, tightened the device 10 fixable to the vehicle body, current connector 30 and screw 71 together with different torques, and tested the connection between the device 10 fixed to the vehicle body and the current connector 30 after a vibration test. The test results are shown in Table 1.

The vibration test is to place a connected sample on a vibration test table, and subjecting them to 300 vibration cycles, with vibrations applied in 6 directions at a frequency of 100Hz and an acceleration of 40m/s² in one direction during each cycle, and then whether the device 10 fixable to the vehicle body is loose from the current connector 30 is observed. In this embodiment, the device 10 fixable to the vehicle body that is loose from the current connector 30 or is damaged during mounting is unqualified.

**Table 1 - effects of different torques on connection**

| torque of the screw 71 screwed into the threaded hole (N·m) | | | | | | | | | | | | | |
|---|---|---|---|---|---|---|---|---|---|---|---|---|---|
| 0.01 | 0.05 | 0.1 | 0.5 | 1 | 3 | 5 | 10 | 15 | 20 | 25 | 30 | 32 | 35 |

| connection between the device 10 fixable to the vehicle body and the current connector 30 | | | | | | | | | | | | | |
|---|---|---|---|---|---|---|---|---|---|---|---|---|---|
| loose | loose | not loose | not loose | not loose | not loose | not loose | not loose | not loose | not loose | not loose | not loose | damaged | damaged |

As can be seen from the Table 1, when a torque value of the screw 71 screwed into the threaded hole is less than 0.1N·m, the device 10 fixable to the vehicle body is loose from the current connector 30 after the vibration test, and when a torque value of the screw 71 screwed into the threaded hole is greater than 30N·m, too much torque is applied to the device 10 fixable to the vehicle body and the current connector 30 due to the excessive torque, thus the device 10 fixable to the vehicle body and the current connector 30 are damaged under high pressure, so that the basic functions of the charging socket cannot be realized. Therefore, the inventor determined that the torque of the screw 71 screwed into the threaded hole ranged from 0.1N·m to 30N·m.

Further, a number of the screw 71 is 1-36. In the charging socket, the current connector 30 is mounted on the device 10 fixable to the vehicle body, and a semi-snap structure can be used to pre-snap the current connector 30 to the device 10 fixable to the vehicle body, and then one screw 71 is used to screw and fix a movable end of the current connector 30 and the device 10 fixable to the vehicle body, in this way, the number of the mounted screws 71 can be reduced, which facilitates assembly and disassembly and improves the working efficiency of charging socket assembly and maintenance. However, the single screw 71 has such a disadvantage that the current connector 30 is not firmly connected to the device 10 fixable to the vehicle body. In certain environments with high vibration, the current connector 30 may be detached from the device 10 fixable to the vehicle body in use. Therefore, in some embodiments, up to 36 screws 71 may be used to fix the current connector 30 to the device 10 fixable to the vehicle body.

As illustrated in FIG. 2, the current connector 30 is provided with an electrical connection device connection hole 311 configured to accommodate the electrical connection device 22 The current connector 30 is disposed at a rear end of the device 10 fixable to the vehicle body, the electrical connection device 22 is configured to be disposed at a front end of the device 10 fixable to the vehicle body, and the electrical connection device 22 is configured to be mounted in the electrical connection device connection hole 311, so that the electrical connection device 22, the current connector 30 and the device 10 fixable to the vehicle body can be locked together.

A number of the electrical connection device 22 may be plural, and the current connectors 30 may be connected to a plurality of the electrical connection device 22, respectively.

Exemplarily, the current connector 30 is a DC connector or an AC connector. A DC connector charging is generally fast charging, and an AC/DC converter is integrated into an external charging pile, so that the DC charging power can be directly obtained from the charging pile. The AC connector integrates the AC/DC converter into a vehicle. The AC connector is generally used for slow charging with a charging power generally around 7kW. A main reason is that the power of the built-in AC/DC converter is generally not high, and factors such as cost and space are also taken into considerations.

Exemplarily, as illustrated in FIGS. 1 and 4, the charging socket includes: a DC connector 31 and an AC connector 32, the AC connector 32 and the DC connector 31 are disposed at the rear end of the device 10 fixable to the vehicle body, and the DC connector 31 is provided with the electrical connection device connection hole 311, and the AC connector 32 is provided with a bump 324 plugged into the electrical connection device connection hole 311 to block the electrical connection device connection hole 311 on the AC connector 32 and improve the dust-proof performance, meanwhile, the AC connector 32 and the DC connector 31 are positioned, and the stability of the overall structure of the charging socket is improved.

Further, the charging socket includes both the DC connector 31 and the AC connector 32, the charging device may be readily selected, and the charging socket may have no matching current connector 30, not because of the singleness of the charging device, so that no charging operation can be performed.

In one embodiment, the cable 21 is detachably connected to the electrical connection device 22. In other embodiments, the electrical connection device 22 is welded with the cable 21. In a case where the electrical connection device 22 is damaged, the electrical connection device 22, the fixing portion and the cable 21 need to be completely removed from the charging socket and replaced, even in severe cases, the entire charging socket needs to be replaced with cumbersome maintenance work, long maintenance man-hours, and high maintenance cost. The cable 21 is detachably connected to the electrical connection device 22. In a case where the electrical connection device 22 is damaged, the electrical connection device 22 may be removed from the current connector 30 and the cable 21 and replaced without replacing the current connector 30 and cable 21, thereby saving maintenance costs and man-hours.

Exemplarily, the cable 21 is made of copper or copper alloy, aluminum or aluminum alloy. Electric vehicle cables require a large-diameter wire for current conduction due to high voltage and high current. Copper conductor materials have good electrical conductivity and good ductility, and are ideal conductor materials for cable. However, the cost of copper as a wire material may be increasingly high as the price of copper increases day by day. For this reason, people begin to search for an alternative to metallic copper to reduce cost. The content of metallic aluminum in the crust is about 7.73%, the price is low after the refining technology is optimized, aluminum is lighter than copper, and has conductivity second only to copper. Aluminum can replace part of copper in the field of electrical connections. Therefore, replacing copper with aluminum in the field of automotive electrical connections becomes a development trend.

The device 10 fixable to the vehicle body and the current connector 30 are made of plastic. The plastic material is selected. First, a production method of injection molding can be adopted to obtain the device 10 fixable to the vehicle body and the current connector 30 with complicated shapes and consistent product performance. In addition, high insulation properties of the plastic material can also ensure insulation properties of the charging socket in use.

In one embodiment, the current connector 30 is provided with a control board and a temperature sensor electrically connected to the control board through a data line, and the temperature sensor transmits a temperature signal to the control board to monitor the temperature of the current connector 30 to avoid damage caused by an excessive temperature. In addition, the temperature sensor may be directly connected to the electrical connection device 22 and obtain a temperature value of the electrical connection device 22 in real time, and transmit the temperature value to the control board, the temperature value of the electrical connection device 22 is controlled through the adjustment of the charging current by the control board, so that the electrical connection device 22 has a measurement accuracy of the temperature close to or equal to a theoretical absolute value, and has extremely high detection accuracy and fast output capability.

Further, the control board is a circuit board that has a built-in control logic circuit. In view of the control logic circuit, when the temperature detected by the temperature sensor is higher than a set temperature, the control board transmits a warning message to monitor the temperature in real time; when the temperature detected by the temperature sensor exceeds the set temperature by a value, the current connector 30 of the control board is automatically disconnected to avoid danger caused by an excessive temperature.

Specifically, the temperature sensor may be an NTC (Negative Temperature Coefficient) temperature sensor or a PTC (Positive Temperature Coefficient) temperature sensor. The NTC temperature sensor uses a negative temperature coefficient thermistor that has a negative temperature coefficient, and the resistance decreases exponentially as the temperature rises. The PTC temperature sensor uses a positive temperature coefficient thermistor that has a positive temperature coefficient, and the resistance increases sharply at a temperature, and can be specially used as a constant temperature sensor. Advantages of using these two temperature sensors are that the temperature sensors are small in size, can measure gaps that cannot be measured by other thermometers and are user friendly and the resistance value may be arbitrarily selected from 0.1kΩ to 100kΩ; the temperature sensors are easily processed into complex shapes and can be mass-produced, have good stability and have strong overload capacity, are suitable for use in a product such as an adapter that requires a small size and stable performance.

### Embodiment II

The present disclosure also involves a vehicle, including the charging socket mentioned above.

Those described above are only the schematic embodiments of the present disclosure, rather than limitations thereto.

## Claims

1. A charging socket comprising: a device (10) fixable to a vehicle body; a current connector (30) and a detachable mechanism (40), wherein the current connector (30) is configured to be connected to an electrical connection device (22) and a cable (21); and the current connector (30) is detachably fixed by the detachable mechanism (40) to the device (10) fixable to the vehicle body;
**characterized in that**
the detachable mechanism (40) comprises a self-locking latch rod (61) disposed on the device (10) fixable to the vehicle body, and a locking shaft (62) disposed on the current connector (30), the self-locking latch rod (61) is hinged to the current connector (30) and is constructed to be flipped relative to the device (10) fixable to the vehicle body and snapped into the locking shaft (62) to fix the current connector (30) to the device (10) fixable to the vehicle body.

2. The charging socket according to claim 1, wherein the current connector (30) is provided with a mounting portion (321), and the device (10) fixable to the vehicle body is provided with a mounting hole (11), and the mounting portion (321) is inserted into the mounting hole (11) and detachably connected.

3. The charging socket according to claim 2, wherein the mounting portion (321) comprises: an arc-shaped wall (323) and a planar wall (322) adapted to an inner wall of the mounting hole (11).

4. The charging socket according to claim 1, wherein the current connector (30) is disposed at a rear end of the device (10) fixable to the vehicle body, the electrical connection device (22) is disposed at a front end of the device (10) fixable to the vehicle body and is connected to the current connector (30); or
the detachable mechanism (40) comprises a spring and a hook disposed on the device (10) fixable to the vehicle body, and a groove disposed on the current connector (30), the current connector (30) is pressed so that the groove is engaged with the hook or disengaged from the hook, and the spring disengages the current connector (30) from the device (10) fixable to the vehicle body.

5. The charging socket according to claim 1, wherein the detachable mechanism (40) comprises a card slot (52) disposed on the device (10) fixable to the vehicle body and a snap-in tab (51) disposed on the current connector (30), and the snap-in tab (51) is snapped into the card slot (52) to fix the current connector (30) to the device (10) fixable to the vehicle body.

6. The charging socket according to claim 5, wherein a notch of the card slot (52) faces sideways, and the snap-in tab (51) moves along with the current connector (30) in a direction along a rear end of the device (10) fixable to the vehicle body pointing towards a front end of the device (10) fixable to the vehicle body until the snap-in tab (51) is snapped into the card slot (52); or
the snap-in tab (51) is disposed on a side of the current connector (30).

7. The charging socket according to claim 1, wherein the self-locking latch rod (61) is provided with a locking groove (611), and after the locking shaft (62) is mated with the self-locking latch rod (61), the self-locking latch rod (61) is capable of generating relative sliding within the locking groove (611) with respect to the self-locking latch rod (61).

8. The charging socket according to claim 7, wherein one end of the locking groove (611) is closed, and the other end of the locking groove (611) is provided with a groove opening (612), and the locking shaft (62) is capable of entering the locking groove (611) through the groove opening (612); or
the locking groove (611) is curved.

9. The charging socket according to claim 1, wherein the device (10) fixable to the vehicle body is provided with a threaded hole, the current connector (30) is provided with a through hole, and the detachable mechanism (40) comprises a screw (71), and the screw (71) is threaded through the through hole and screwed into the threaded hole to fix the current connector (30) to the device (10) fixable to the vehicle body.

10. The charging socket according to claim 9, wherein the threaded hole is an embedded or pre-embedded internal threaded stud;
the internal threaded stud is made of metal.

11. The charging socket according to claim 9, wherein a torque of the screw (71) screwed into the threaded hole ranges from 0.1N·m to 30N·m; or
a number of the screw (71) is 1-36.

12. The charging socket according to claim 1, wherein the current connector (30) is provided with an electrical connection device connection hole (311) configured to accommodate the electrical connection device (22).

13. The charging socket according to claim 12, the charging socket comprising the cable (21) and a plurality of electrical connection devices (22);
the current connector (30) is a DC connector (31) or an AC connector (32);
the charging socket comprises the DC connector (31) provided with an electrical connection device connection hole (311) and the AC connector (32) provided with a bump (324) plugged into the electrical connection device connection hole (311); or
the cable (21) is detachably connected to the electrical connection devices (22); or
the cable (21) is made of copper or copper alloy, or aluminum or aluminum alloy; or
the device (10) fixable to the vehicle body and the current connector (30) are made of plastic; or
the current connector (30) is provided with a control board and a temperature sensor electrically connected to the control board through a data line;
the control board is a circuit board that has a built-in control logic circuit;
the temperature sensor is an NTC temperature sensor or a PTC temperature sensor.

14. A vehicle, comprising the charging socket according to any one of claims 1 to 13.

## Patentansprüche

1. Ladesteckdose, umfassend: eine an der Fahrzeugkarosserie befestigbare Vorrichtung (10); einen Stromanschluss (30) und einen abnehmbaren Mechanismus (40), wobei der Stromanschluss (30) so konfiguriert ist, dass er mit einer elektrischen Verbindungsvorrichtung (22) und einem Kabel (21) verbunden werden kann; und der Stromanschluss (30) mittels des abnehmbaren Mechanismus (40) abnehmbar an der an der Fahrzeugkarosserie befestigbaren Vorrichtung (10) befestigt ist;
**dadurch gekennzeichnet, dass**
der abnehmbare Mechanismus (40) eine selbstverriegelnde Sperrstange (61), die an der an der Fahrzeugkarosserie befestigbaren Vorrichtung (10) angeordnet ist, und einen Verriegelungsschacht (62) umfasst, der am Stromanschluss (30) angeordnet ist, die selbstverriegelnde Sperrstange (61) am Stromanschluss (30) angelenkt und so ausgebildet ist, dass sie relativ zu der an der Fahrzeugkarosserie befestigbaren Vorrichtung (10) umgeklappt und in den Verriegelungsschacht (62) eingerastet werden kann, um den Stromanschluss (30) an der an der Fahrzeugkarosserie befestigbaren Vorrichtung (10) zu befestigen.

2. Ladesteckdose nach Anspruch 1, wobei der Stromanschluss (30) mit einem Montageabschnitt (321) bereitgestellt ist und die an der Fahrzeugkarosserie befestigbare Vorrichtung (10) mit einer Montagebohrung (11) bereitgestellt ist, wobei der Montageabschnitt (321) in die Montagebohrung (11) eingeführt und abnehmbar verbunden wird.

3. Ladesteckdose nach Anspruch 2, wobei der Montageabschnitt (321) umfasst: eine bogenförmige Wand (323) und eine ebene Wand (322), die an einer Innenwand der Montagebohrung (11) angepasst ist.

4. Ladesteckdose nach Anspruch 1, wobei der Stromanschluss (30) an einem hinteren Ende der an der Fahrzeugkarosserie befestigbaren Vorrichtung (10) angeordnet ist, die elektrische Verbindungsvorrichtung (22) an einem vorderen Ende der an der Fahrzeugkarosserie befestigbaren Vorrichtung (10) angeordnet ist und mit dem Stromanschluss (30) verbunden ist; oder
der abnehmbare Mechanismus (40) eine Feder und einen Haken, die an der an der Fahrzeugkarosserie befestigbaren Vorrichtung (10) angeordnet sind, sowie eine Nut umfasst, die am Stromanschluss (30) angeordnet ist, der Stromanschluss (30) so gedrückt wird, dass die Nut mit dem Haken in Eingriff kommt oder vom Haken gelöst wird, und die Feder den Stromanschluss (30) von der an der Fahrzeugkarosserie befestigbaren Vorrichtung (10) löst.

5. Ladesteckdose nach Anspruch 1, wobei der abnehmbare Mechanismus (40) eine Rastnut (52), die an der an der Fahrzeugkarosserie befestigbaren Vorrichtung (10) angeordnet ist, und eine Rastlasche (51) umfasst, die am Stromanschluss (30) angeordnet ist, und wobei die Rastlasche (51) in die Rastnut (52) einrastet, um den Stromanschluss (30) an der an der Fahrzeugkarosserie befestigbaren Vorrichtung (10) zu befestigen.

6. Ladesteckdose nach Anspruch 5, wobei eine Kerbe der Rastnut (52) seitlich gerichtet ist und sich die Rastlasche (51) zusammen mit dem Stromanschluss (30) in einer Richtung entlang eines hinteren Endes der an der Fahrzeugkarosserie befestigbaren Vorrichtung (10) bewegt, das auf ein vorderes Ende der an der Fahrzeugkarosserie befestigbaren Vorrichtung (10) zeigt, bis die Rastlasche (51) in die Rastnut (52) einrastet; oder
die Rastlasche (51) an einer Seite des Stromanschlusses (30) angeordnet ist.

7. Ladesteckdose nach Anspruch 1, wobei die selbstverriegelnde Sperrstange (61) mit einer Verriegelungsnut (611) bereitgestellt ist und nach dem Zusammenfügen des Verriegelungsschachts (62) mit der selbstverriegelnden Sperrstange (61) die selbstverriegelnde Sperrstange (61) eine relative Gleitbewegung innerhalb der Verriegelungsnut (611) in Bezug auf die selbstverriegelnde Sperrstange (61) erzeugen kann.

8. Ladesteckdose nach Anspruch 7, wobei ein Ende der Verriegelungsnut (611) geschlossen ist und das andere Ende der Verriegelungsnut (611) mit einer Nutöffnung (612) bereitgestellt ist, und der Verriegelungsschacht (62) durch die Nutöffnung (612) in die Verriegelungsnut (611) eintreten kann; oder
die Verriegelungsnut (611) gebogen ist.

9. Ladesteckdose nach Anspruch 1, wobei die an der Fahrzeugkarosserie befestigbare Vorrichtung (10) mit einem Gewindeloch bereitgestellt ist, der Stromanschluss (30) mit einer Durchgangsbohrung bereitgestellt ist und der abnehmbare Mechanismus (40) eine Schraube (71) umfasst, und die Schraube (71) durch die Durchgangsbohrung eingezogen und in das Gewindeloch eingeschraubt wird, um den Stromanschluss (30) an der an der Fahrzeugkarosserie befestigbaren Vorrichtung (10) zu befestigen.

10. Ladesteckdose nach Anspruch 9, wobei es sich bei dem Gewindeloch um einen eingebetteten oder vorab eingebetteten internen Gewindebolzen handelt;
der interne Gewindebolzen aus Metall gefertigt ist.

11. Ladesteckdose nach Anspruch 9, wobei ein Drehmoment der in das Gewindeloch eingeschraubten Schraube (71) im Bereich von 0,1 Nm bis 30 Nm liegt; oder
eine Anzahl der Schrauben (71) 1-36 beträgt.

12. Ladesteckdose nach Anspruch 1, wobei der Stromanschluss (30) mit einer Verbindungsbohrung (311) für eine elektrische Verbindungsvorrichtung bereitgestellt ist, die zur Aufnahme der elektrischen Verbindungsvorrichtung (22) ausgelegt ist.

13. Ladesteckdose nach Anspruch 12, wobei die Ladesteckdose das Kabel (21) und eine Vielzahl von elektrischen Verbindungsvorrichtungen (22) umfasst;
der Stromanschluss (30) ein Gleichstromanschluss (31) oder ein Wechselstromanschluss (32) ist;
die Ladesteckdose den Gleichstromanschluss (31), der mit einer Verbindungsbohrung (311) für elektrische Verbindungsvorrichtungen bereitgestellt ist, und den Wechselstromanschluss (32) umfasst, der mit einem Vorsprung (324) bereitgestellt ist, der in die Verbindungsbohrung (311) für elektrische Verbindungsvorrichtungen eingesteckt ist; oder
das Kabel (21) abnehmbar mit den elektrischen Verbindungsvorrichtungen (22) verbunden ist; oder
das Kabel (21) aus Kupfer oder einer Kupferlegierung oder aus Aluminium oder einer Aluminiumlegierung gefertigt ist; oder
die an der Fahrzeugkarosserie befestigbare Vorrichtung (10) und der Stromanschluss (30) aus Kunststoff gefertigt sind; oder
der Stromanschluss (30) mit einer Steuerplatine und einem Temperatursensor bereitgestellt ist, der über eine Datenleitung elektrisch mit der Steuerplatine verbunden ist;
die Steuerplatine eine Leiterplatte mit eingebauter Steuerlogikschaltung ist;
der Temperatursensor ein NTC-Temperatursensor oder ein PTC-Temperatursensor ist.

14. Fahrzeug, umfassend die Ladesteckdose nach einem der Ansprüche 1 bis 13.

## Revendications

1. Prise de charge comprenant : un dispositif (10) pouvant être fixé à la carrosserie d'un véhicule ; un connecteur de courant (30) et un mécanisme détachable (40), dans laquelle le connecteur de courant (30) est configuré pour être connecté à un dispositif de connexion électrique (22) et à un câble (21) ; et le connecteur de courant (30) est fixé de manière détachable par le mécanisme détachable (40) au dispositif (10) pouvant être fixé à la carrosserie du véhicule ;
**caractérisée en ce que**
le mécanisme détachable (40) comprend une tige de verrouillage autobloquante (61) disposée sur le dispositif (10) pouvant être fixé à la carrosserie du véhicule, et un arbre de blocage (62) disposé sur le connecteur de courant (30), la tige de verrouillage autobloquante (61) est reliée par charnière au connecteur de courant (30) et est construite pour être basculée par rapport au dispositif (10) pouvant être fixé à la carrosserie du véhicule et encliquetée dans l'arbre de blocage (62) pour fixer le connecteur de courant (30) au dispositif (10) pouvant être fixé à la carrosserie du véhicule.

2. Prise de charge selon la revendication 1, dans laquelle le connecteur de courant (30) est pourvu d'une partie de montage (321), et le dispositif (10) pouvant être fixé à la carrosserie du véhicule est pourvu d'un trou de montage (11), et la partie de montage (321) est insérée dans le trou de montage (11) et reliée de manière détachable.

3. Prise de charge selon la revendication 2, dans laquelle la partie de montage (321) comprend : une paroi en forme d'arc (323) et une paroi plane (322) adaptées à une paroi intérieure du trou de montage (11).

4. Prise de charge selon la revendication 1, dans laquelle le connecteur de courant (30) est disposé à l'extrémité arrière du dispositif (10) pouvant être fixé à la carrosserie du véhicule, le dispositif de connexion électrique (22) est disposé à l'extrémité avant du dispositif (10) pouvant être fixé à la carrosserie du véhicule et est connecté au connecteur de courant (30) ; ou
le mécanisme détachable (40) comprend un ressort et un crochet disposés sur le dispositif (10) pouvant être fixé à la carrosserie du véhicule, et une rainure disposée sur le connecteur de courant (30), le connecteur de courant (30) est enfoncé de façon à ce que la rainure entre en prise avec le crochet ou se désolidarise du crochet, et le ressort désolidarise le connecteur de courant (30) du dispositif (10) pouvant être fixé à la carrosserie du véhicule.

5. Prise de charge selon la revendication 1, dans laquelle le mécanisme détachable (40) comprend une fente pour carte (52) disposée sur le dispositif (10) pouvant être fixé à la carrosserie du véhicule et une languette à encliquetage (51) disposée sur le connecteur de courant (30), et la languette à encliquetage (51) est encliquetée dans la fente pour carte (52) pour fixer le connecteur de courant (30) au dispositif (10) pouvant être fixé à la carrosserie du véhicule.

6. Prise de charge selon la revendication 5, dans laquelle une encoche de la fente pour carte (52) est orientée latéralement, et la languette à encliquetage (51) se déplace en même temps que le connecteur de courant (30) dans une direction le long de l'extrémité arrière du dispositif (10) pouvant être fixé à la carrosserie du véhicule pointant vers l'extrémité avant du dispositif (10) pouvant être fixé à la carrosserie du véhicule jusqu'à ce que la languette à encliquetage (51) soit encliquetée dans la fente pour carte (52) ; ou
la languette à encliquetage (51) est disposée sur un côté du connecteur de courant (30).

7. Prise de charge selon la revendication 1, dans laquelle la tige de verrouillage autobloquante (61) est pourvue d'une rainure de blocage (611), et après que l'arbre de blocage (62) s'est accouplé à la tige de verrouillage autobloquante (61), la tige de verrouillage autobloquante (61) est capable de générer un coulissement relatif dans la rainure de blocage (611) par rapport à la tige de verrouillage autobloquante (61).

8. Prise de charge selon la revendication 7, dans laquelle une extrémité de la rainure de blocage (611) est fermée, et l'autre extrémité de la rainure de blocage (611) est pourvue d'une ouverture de rainure (612), et l'arbre de blocage (62) est capable de pénétrer dans la rainure de blocage (611) par l'intermédiaire de l'ouverture de rainure (612) ; ou
la rainure de blocage (611) est incurvée.

9. Prise de charge selon la revendication 1, dans laquelle le dispositif (10) pouvant être fixé à la carrosserie du véhicule est pourvu d'un trou fileté, le connecteur de courant (30) est pourvu d'un trou débouchant, et le mécanisme détachable (40) comprend une vis (71), et la vis (71) est filetée à travers le trou débouchant et vissée dans le trou fileté pour fixer le connecteur de courant (30) au dispositif (10) pouvant être fixé à la carrosserie du véhicule.

10. Prise de charge selon la revendication 9, dans laquelle le trou fileté est un goujon fileté interne incorporé ou pré-incorporé ;
le goujon fileté interne est fait de métal.

11. Prise de charge selon la revendication 9, dans laquelle le couple de rotation de la vis (71) vissée dans le trou fileté est compris entre 0,1 N·m et 30 N·m ; ou
le numéro de la vis (71) est 1-36.

12. Prise de charge selon la revendication 1, dans laquelle le connecteur de courant (30) est pourvu d'un trou de connexion de dispositif de connexion électrique (311) configuré pour recevoir le dispositif de connexion électrique (22).

13. Prise de charge selon la revendication 12, la prise de charge comprenant le câble (21) et une pluralité de dispositifs de connexion électrique (22) ;
le connecteur de courant (30) est un connecteur CC (31) ou un connecteur CA (32) ;
la prise de charge comprend le connecteur CC (31) pourvu d'un trou de connexion de dispositif de connexion électrique (311) et le connecteur CA (32) pourvu d'une bosse (324) introduite dans le trou de connexion de dispositif de connexion électrique (311) ; ou
le câble (21) est connecté de manière détachable aux dispositifs de connexion électrique (22) ; ou
le câble (21) est fait de cuivre ou d'un alliage de cuivre, ou d'aluminium ou d'un alliage d'aluminium ; ou
le dispositif (10) pouvant être fixé à la carrosserie du véhicule et le connecteur de courant (30) sont faits de plastique ; ou
le connecteur de courant (30) est pourvu d'une carte de commande et d'un capteur de température connecté électriquement à la carte de commande par l'intermédiaire d'une ligne de données ;
la carte de commande est une carte de circuit imprimé qui présente un circuit logique de commande intégré ;
le capteur de température est un capteur de température NTC ou un capteur de température PTC.

14. Véhicule, comprenant la prise de charge selon l'une quelconque des revendications 1 à 13.
